# EUROPEAN PATENT SPECIFICATION

(11) **EP 3 230 363 B1**
(45) Date of publication and mention of the grant of the patent: **22.09.2021**
(21) Application number: 15798008.7
(22) Date of filing: 17.11.2015
(51) Int. Cl.: C08L 23/06, C08L 23/16, C08L 51/06, C08K 3/32, C09D 123/06

(54) **POLYMER COMPOSITIONS FOR THERMAL SPRAY COATING**
POLYMERZUSAMMENSETZUNGEN FÜR THERMISCHE SPRÜHBESCHICHTUNG
COMPOSITIONS POLYMÈRES POUR REVÊTEMENT PAR PULVÉRISATION THERMIQUE

(30) Priority: 11.12.2014 EP 14197301
(43) Date of publication of application: 18.10.2017
(73) Proprietor: SABIC Global Technologies B.V., 4612 PX Bergen op Zoom (NL)
(72) Inventor: NEUTEBOOM, Peter, NL-6160 GA Geleen (NL); SOLIMAN, Maria, NL-6160 GA Geleen (NL)
(74) Representative: Sabic Intellectual Property Group
(86) International application number: PCT/EP2015/076862
(87) International publication number: WO 2016/091543

(56) References cited:
- EP-A2- 0 207 734
- EP-A2- 0 403 056
- WO-A1-99/35183
- US-A- 3 697 465
- US-A- 4 753 423
- US-A1- 2008 075 962
- None

## Description

The present invention relates to polymer compositions for thermal spray coating. The invention also relates to coatings comprising said polymer compositions applied onto a substrate material by thermal spray coating.

In order to prevent structural objects exposed to environmental conditions from corrosion, the surface of such objects is generally covered with a paint or coating layer. This layer prevents the surface to be in direct contact with the ambient environment, and by so reduces the risk of corrosion of the object. The paint or coating layer, further referred to as the coating, provides a barrier against exposition of the surface of the object to e.g. humidity, ultraviolet radiation, salt spray and severe weather conditions. The coating can be applied onto various substrate materials, for example steel, concrete or resinous materials.

There are several disadvantages of using conventional coatings for corrosion protection of structural objects. In many instances, it is required to apply multiple layers, such as a base coat, a main coating layer, and a clear coat layer. Also, repairing cracks or other damages is difficult, as it requires first the partial removal of the coating in the damaged area, then a preparation of the surface to ensure good compatibility of the new coating onto the existing coating, and subsequently the application of the coating in one or more layers.

Another disadvantage of conventional coating systems is related to the occurrence of defects resulting from long-term exposure to environmental conditions. Occurrence of such defects may lead to corrosion of the substrate material in those areas, as the coating no longer provides the needed protection against environmental conditions. In order to avoid structural damage to the coated objects, preventive replacement of the coating by re-painting has to take place periodically. As this re-painting accounts for a significant fraction of the cost of maintenance of such objects, there is an ongoing need to develop coating materials that withstand the environmental conditions to which the structural objects are subjected for a longer time before preventive replacement becomes necessary.

By using thermoplastic materials as coating materials for such structural objects, these disadvantages may partly be overcome. A class of thermoplastics materials that is particularly suitable for coating structural objects to protect them against corrosion are polyolefins. In particular, the application of such thermoplastic materials onto the surface of an object can be achieved via thermal spray coating. This involves heating the thermoplastic material to a temperature allowing it to be sprayed onto the object.

Advantages of using thermoplastic materials for thermal spray coating applications are for example the fact that it is easy to repair defects such as scratches by applying heat, optionally with spraying of additional material. The applied heat will result in a partial molten or softened coating, which solidifies upon removal of the heat source. Upon solidification the material will form a closed matrix again, thus protecting the coated surface from environmental influences.

For processing of thermoplastic materials via thermal spray coating, it is required that the heat dissipation in the thermal spray coating application device is controlled in such way that the thermoplastic material, which is introduced in the form of solid particles, is sufficiently softened or molten to be able to adhere to the surface of the object and provide a uniform coating layer, whilst ensuring that the heat to which the material is exposed is not so excessive as to induce discoloration, degradation or crosslinking of the material, which has a negative effect on both esthetical and qualitative properties of the coating. In order to provide for this, the particles of the thermoplastic material that is used may for example have certain dimensions.

The use of thermoplastic materials, in particular polyolefin materials, for application by thermal spray coating is described in various publications. However, there are many difficulties to overcome in optimization of thermoplastic materials for thermal spray coating. As the application is targeted at long-term corrosion protection of infrastructural objects that are subject to environmental conditions, the coatings need to have such properties that allow use for this application.

US2718473 discloses application of polyethylene coating via flame spraying onto substrate surfaces. The document acknowledges the difficulty in obtaining a coating with sufficient adhesion. The solution provided is to ensure the substrate to be heated to at least 425°F (218°C). It is reported that if coatings are applied at temperatures above this value, the adhesive force is greater than the cohesive force of the material, which means that upon peeling, the coating will tear by cohesive failure rather than adhesive failure. However, there are clear practical objections to heating the substrate surface to such high temperatures.

WO199302802 discloses the use of carboxyl-containing polyolefins in thermal spray coating. It is stated that the use of polymer compositions with inherent chemical functionality is required in order to provide adequate adhesion properties. Although showing improved adhesion properties, a disadvantage of the materials disclosed in WO199302802 is that they result in coatings with insufficient long-term adhesion.

Polyethylene compositions for thermal spray coating applications are also described in US20070173590. This publication discloses mechanical blends of polyethylene with ethylene acrylic acid, and optionally a polyetheramide elastomer. Such blends however suffer from a drawback in that the mixing of the different components is may not be very efficient, and may result in coating properties which are below the requirements for long-term protection of structural objects.

US-H-2035 discloses thermal spray coating of non-polar polymers, such as polyethylenes, onto metallic substrates. This publication addresses the lack of adhesion of such non-polar polymers to the surface of such metallic substrates. Suggested solutions to overcome this are surface roughening or application of metallic fibers onto the surface to allow for mechanical interlocking of the polymer with the rough surface. However, the drawback of this is that an additional surface pre-treatment step is required, and that the appeal of the surface may be deteriorated as a result of the roughening step.

US5792518 describes coating solutions for piping, which include application of a base coat of for example an epoxy paint, and a top coat in the form of a polyolefin selected from ethylene (meth)acrylic acid polymers and polyolefins modified with a functional ethylenically unsaturated carboxylic acid group. Although this system shows good adhesive properties, it suffers from the disadvantage that a base coat is required.

It is an object of the present invention to provide polymer compositions that can be used in thermal spray coating processes resulting in coatings with improved long-term weather resistance, long-term corrosion resistance and improved coating to substrate adhesion, without the need of applying a base coat.

This is provided by a polymer composition comprising
a) an α-olefin homopolymer or copolymer;
b) a functionalized α-olefin homopolymer or copolymer;
c) a polyolefinic elastomer; and
d) an anti-corrosion additive, wherein the anti-corrosion additive is zinc phosphate

Preferably, such polymer composition comprises:
a) an α-olefin homopolymer or copolymer;
b) 0.5 - 10 wt% of a functionalized α-olefin homopolymer or copolymer;
c) 0.5 - 25 wt% of a polyolefinic elastomer; and
d) 1.0 - 30 wt% of an anti-corrosion additive, wherein the anti-corrosion additive is zinc phosphate
with regard to the total weight of the polymer composition.

Even more preferably, such polymer composition comprises:
a) 60.0 - 95.0 wt% of an α-olefin homopolymer or copolymer;
b) 1.0 - 5 wt% of a functionalized α-olefin homopolymer or copolymer;
c) 2.0 - 15 wt% of a polyolefinic elastomer; and
d) 2.0 - 15 wt% of an anti-corrosion additive, wherein the anti-corrosion additive is zinc phosphate
with regard to the total weight of the polymer composition.

Such polymer compositions show good long-term corrosion resistance, good coating to substrate adhesion, good long-term adhesion and good long-term weather resistance. Said polymer compositions may be applied without need for applying a base coat.

Such polymer composition may for example be prepared by melt compounding.

Melt compounding in this context means a process of mixing different ingredients of a composition under conditions at which at least one of the ingredients is in a molten state, in such way that the ingredients are dispersed into the at least one ingredient which is in a molten state and, upon cooling, results in a solid system in which all the ingredients that were introduced to the process are constrained.

For example, said melt compounding process may be done via a process comprising a melt extruder. Said melt extruder may for example be a single-screw extruder or a twin-screw extruder. In case a twin-screw extruder is used in said melt compounding process, said twin-screw extruder may for example be of the co-rotating type or of the counter-rotating type. Alternatively, said melt compounding process may comprise other melt mixing devices suitable for mixing thermoplastic polymers.

In an embodiment, the polymer composition comprises for example at least 0.5 wt% functionalized α-olefin homopolymers or copolymers, alternatively at least 1.0 wt%, alternatively at least 2.0 wt%, in respect of the total weight of the polymer composition. The polymer composition comprises for example at most 10 wt% functionalized α-olefin homopolymers, alternatively at most 5 wt%, alternatively at most 4 wt%, in respect of the total weight of the polymer composition. Preferably, the polymer composition comprises 0.5 - 10 wt% of functionalized α-olefin homopolymers or copolymers, more preferably 1.0 - 5 wt%, in respect of the total weight of the polymer composition.

In another embodiment, the polymer composition comprises for example at least 0.5 wt% polyolefinic elastomers, alternatively at least 1.0 wt%, alternatively at least 2.0 wt%, alternatively at least 4.0 wt%, in respect of the total weight of the polymer composition. The polymer composition comprises for example at most 25 wt% polyolefinic elastomers, alternatively at most 20 wt%, alternatively at most 15 wt%, alternatively at most 10 wt%, alternatively at most 7 wt%, in respect of the total weight of the polymer composition. Preferably, the polymer composition comprises 0.5 - 25 wt% of polyolefinic elastomers, more preferably 2.0 - 15 wt%, in respect of the total weight of the polymer composition.

The α-olefin homopolymers or copolymers may for example be selected from propylene homopolymers, propylene copolymers, low density polyethylenes, very low density polyethylenes, linear low density polyethylenes, medium density polyethylenes, and/or high density polyethylenes. In one embodiment, the α-olefin homopolymers or copolymers may be low density polyethylenes. In the context of the present invention, low density polyethylenes are defined as polyethylenes prepared in a high-pressure polymerisation process which have a density of between 910 and 940 kg/m³; very low density polyethylenes are defined as polyethylenes prepared in a catalytic low-pressure polymerisation process which have a density of at most 915 kg/m³; linear low density polyethylenes are defined as polyethylenes prepared in a catalytic low-pressure polymerisation process which have a density of between 916 kg/m³ and 925 kg/m³; medium density polyethylenes are defined as polyethylenes prepared in a catalytic low-pressure polymerisation process which have a density of between 926 kg/m³ and 940 kg/m³; high density polyethylenes are defined as polyethylenes prepared in a catalytic low-pressure polymerisation process which have a density at least 941 kg/m³. Said density of said polyethylenes is measured according to ISO 1183. High-pressure and low-pressure polymerization processes for the production of polyethylenes are well known in the art, and for example described in Nexant Chemsystems Report PERP 2013-2 on low density polyethylene, Nexant Chemsystems Report PERP 2012-4 on linear low density polyethylene, and Nexant Chemsystems Report PERP 09/10-3 on high density polyethylene. Preferably, the α-olefin homopolymers or copolymers are one or more low density polyethylene. Low density polyethylene may also be referred to as LDPE. Most prefereably, the α-olefin homopolymers or copolymers are a low density polyethylene having a density of between 910 and 940 kg/m³.

Said α-olefin homopolymers or copolymers may for example be produced via high-pressure free radical polymerization processes or via catalytic processes. Examples of such catalytic low-pressure processes are slurry polymerization, gas phase polymerization and solution polymerization. Examples of catalyst systems that may be used in such catalytic low-pressure processes are Ziegler-Natta catalysts, chromium-based Phillips-type catalysts, and single-site catalysts, which are also known as metallocene catalysts.

The polymer composition may for example comprise at least 60.0 wt%, alternatively at least 70.0 wt% of such α-olefin homopolymers or copolymers with regard to the total weight of the polymer composition. The polymer composition may for example comprise at most 95.0 wt%, alternatively at most 90.0 wt% of such α-olefin homopolymers or copolymers with regard to the total weight of the polymer composition. Preferably, the polymer composition comprises 60.0 - 95.0 wt% of such α-olefin homopolymers or copolymers, more preferably 70.0 - 90.0 wt%, with regard to the total weight of the polymer composition.

Said propylene homopolymers or propylene copolymers may have a melt index as measured according to ISO 1133 at a temperature of 230°C and a load of 2.16 kg of for example at least 3.0 g/10 min, alternatively for example at least 4.0 g/10 min, alternatively at least 5.0 g/10 min.

Said low density polyethylenes, very low density polyethylenes, linear low density polyethylenes, medium density polyethylenes or high density polyethylenes may have a melt index as measured according to ISO 1133 at a temperature of 190°C and a load of 2.16 kg of for example at least 2.0 g/10 min, alternatively for example at least 2.5 g/10 min, alternatively for example at least 3.0 g/10 min, alternatively for example at least 4.0 g/10 min.

The functional moiety in the functionalized α-olefin homopolymers or copolymers may for example be present as part of the main polymer chain or of one of more of the side chains, as a moiety grafted onto the polymer, or as a functional end group terminating the main polymer chain or one or more of the side chains. The functional moiety may be one or more selected from a hydroxyl functional moiety, an amine functional moiety, an acrylic or methacrylic acid functional moiety, a cyclic acid anhydride functional moiety, a siloxy functional moiety or an amino-silane functional moiety.

In the context of the present invention, hydroxyl functional moieties are moieties that result from reaction of one or more compounds of formula (I) with one or more α-olefins or an α-olefin homopolymer or copolymer.

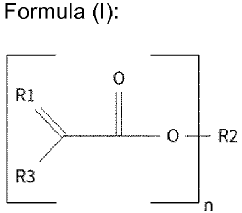

In which R1 may for example be a hydrocarbon group comprising at least one carbon atom, alternatively R1 may for example be CH₂; R2 may for example be a hydrocarbon group comprising at least one carbon atom and comprising at least one OH group, alternatively R2 may for example be a hydrocarbon group comprising 1-10 carbon atoms and comprising at least one OH group, alternatively R2 may for example be selected from a hydroxyethyl group, a hydroxypropyl group, a dihydroxyethyl group, a dihydroxypropyl group, or an alkenol; R3 may for example be hydrogen or a CH₃ group; n may for example be an integer between 0 and 5, alternatively n may for example be selected from 1, 2 or 3 .

In the context of the present invention, amine functional moieties are moieties that result from reaction of one or more compounds of formula (I) with one or more α-olefins or an α-olefin homopolymer or copolymer, in which R1 may for example be a hydrocarbon group comprising at least one carbon atom, alternatively R1 may for example be CH₂; R3 may for example be hydrogen or a CH₃ group; n may for example be an integer between 0 and 5, alternatively n may for example be selected from 1, 2 or 3; R2 may for example be a group according to formula (II).

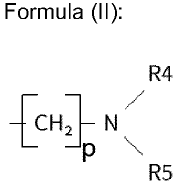

In which each of R4 or R5 may for example be selected from hydrogen or a hydrocarbon group comprising 1 to 10 carbon atoms, and each of R4 or R5 may be the same or different; p may for example be an integer between 0 and 5, alternatively p may for example be selected from 1, 2 or 3.

In the context of the present invention, acrylic or methacrylic acid functional moieties are moieties that result from reaction of one or more compounds of formula (I) with one or more α-olefins or an α-olefin homopolymer or copolymer, in which R1 may for example be a hydrocarbon group comprising at least one carbon atom, alternatively R1 may for example be CH₂; R2 may for example be a hydrocarbon group comprising at least one carbon atom, alternatively R2 may for example be a hydrocarbon group comprising 1-10 carbon, alternatively R2 may for example be selected from a methyl group, an ethyl group, or a propyl group; R3 may for example be hydrogen or a CH₃ group; n may for example be an integer between 0 and 5, alternatively n may for example be an integer selected from 1, 2 or 3.

Examples of compounds according to formula (I) are hydroxyethylmethacrylate, hydroxyethylacrylate, dihydroxypropylmethacrylate, dihydroxypropylacrylate, butanedioldimethacrylate, butanedioldiacrylate, hydroxypropylmethacrylate, hydroxypropylacrylate, methylmethacrylate, diethylaminoethylmethacrylate, diethylaminoethylacrylate, dimethylaminoethylmethacrylate, dimethylaminoethylacrylate, tert-butylaminoethylmethacrylate, tert-butylaminoethylacrylate, ditertbutylaminoethylmethacrylate, ditertbutylaminoethylacrylate, methylmethacrylate, methylacrylate,

In the context of the present invention, cyclic acid anhydride functional moieties are moieties that result from reaction of one or more compounds of formula (III) with one or more α-olefins or an α-olefin homopolymer or copolymer.

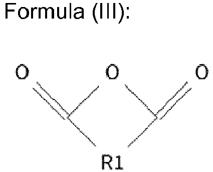

In which R1 may for example be a hydrocarbon moiety having at least two carbon atoms, in which at least two carbon atoms are connected via a carbon-carbon double bond that is capable of reacting via addition reaction mechanisms.

Examples of compounds according to formula (III) are maleic anhydride and glutaconic anhydride.

In the context of the present invention, siloxy functional moieties are moieties that result from reaction of one or more compounds of formula (IV) with one or more α-olefins or an α-olefin homopolymer or copolymer.

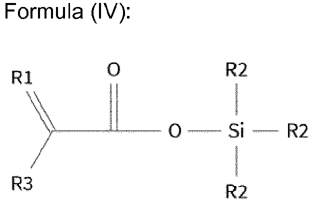

In which R1 may for example be a hydrocarbon group comprising at least one carbon atom, alternatively R1 may for example be CH₂; R2 may for example be selected from alkoxy groups comprising 1-4 carbon atoms, hydrocarbon groups comprising 1-4 carbon atoms, or siloxy groups, in which each of R2 groups may be the same or different; R3 may for example be hydrogen or a CH₃ group.

Examples of compounds according to formula (IV) are trimethyl siloxy ethyl methacrylate, 3-[tris(trimethylsiloxy)silyl]propyl methacrylate, (trimethylsilyl)methacrylate, ethyl 2-(trimethylsilylmethyl)acrylate, trimethylsilyl crotonate and trimethylsilyl acrylate.

In the context of the present invention, amino-silane functional moieties are moieties that result from reaction of one or more compounds of formula (V) with one or more α-olefins or an α-olefin homopolymer or copolymer.

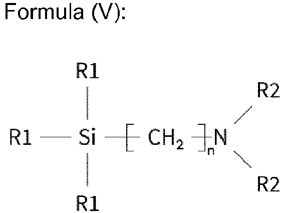

In which R1 may for example be selected from alkoxy groups comprising 1-4 carbon atoms or hydrocarbon groups comprising 1-4 carbon atoms, in which each of R1 groups may be the same or different, and in which at least one R1 group is an alkoxy group; R2 may for example be selected from hydrogen or hydrocarbon groups comprising 1-10 carbon atoms, in which each of R2 groups may be the same or different; n may for example be an integer between 0 and 5, alternatively n may for example be an integer selected from 1, 2 or 3.

Examples of compounds according to formula (V) are 3-aminopropylmethyldiethoxysilane, 3-aminopropyltriethoxysilane, and 3-aminopropyltrimethoxysilane.

Grafting of functional moieties may for example be performed by peroxide-initiated radical reactions such as described in 'Recipe Effects Upon Grafting of Maleic Anhydride Onto Polyethylene During Compounding in a Twin Screw Extruder', Machado et al., e-rheo.pt, 2 (2002) p. 20-29. For example, the compounds that are grafted to the polymer comprise a vinyl moiety. For example, maleic anhydride is used as compound to be grafted onto the polymer.

The functionalized α-olefin homopolymers or copolymers may for example be selected from maleic anhydride-grafted polyethylene, maleic anhydride-grafted polypropylene, or a copolymer of ethylene and a polar comonomer, in which said polar comonomer may for example be selected from hydroxyethylmethacrylate or dimethylaminomethacrylate.

The polyolefinic elastomers may for example be selected from copolymers of ethylene and at least one α-olefin containing 3 to 8 carbon atoms, having a density of between 855 kg/m³ and 920 kg/m³, preferably of between 855 kg/m³ and 890 kg/m³, as measured according to ISO 1183. In an embodiment, said polyolefinic elastomers have a melt index of between 0.5 and 40 g/10 min as measured according to ISO 1133 at a temperature of 190°C and a load of 2.16 kg. Preferably, the polyolefinic elastomers are selected from copolymers of ethylene and at least one of 1-butene, 1-hexene and 1-octene. More preferably, the polyolefinic elastomers are copolymers of ethylene and 1-octene. Even more preferably, the polyolefinic elastomers are copolymers of ethylene and 1-octene having a density of between 855 kg/m³ and 890 kg/m³ as measured according to ISO 1183.

The anti-corrosion additive is zinc phosphate.

Said anti-corrosion additive may for example be present in said polymer composition in a quantity of at most 30 wt%, alternatively for example at most 25 wt%, alternatively for example at most 20 wt%, alternatively for example at most 15 wt%, alternatively for example at most 10 wt%, alternatively for example at most 8 wt%, alternatively for example at most 7 wt%, alternatively for example at most 6 wt%, alternatively for example at most 5 wt%, in respect of the total weight of the polymer composition.

Said anti-corrosion additive may for example be present in said polymer composition in a quantity of at least 1.0 wt%, alternatively for example at least 2.0 wt%, alternatively for example at least 3.0 wt%, alternatively for example at least 4.0 wt%, in respect of the total weight of the polymer composition.

Preferably, the anti-corrosion additive is present is the polymer composition in a quantity of 1.0 - 20 wt%, more preferably 3.0 - 15 wt%, in respect of the total weight of the polymer composition. The presence of such anti-corrosion additive in quantities of at least 1.0 wt% may contribute to a desired high corrosion resistance. Most preferably, the polymer composition comprises 3.0 - 15 wt% of zinc phosphate in respect of the total weight of the polymer composition.

The quantity of zinc that is present in said polymer composition may for example be at least 0.5 wt%, alternatively for example at least 1.0 wt%, alternatively for example at least 1.5 wt%, alternatively for example at least 2.0 wt%, alternatively for example at least 3.0 wt%, alternatively for example at least 4.0 wt%, in respect of the total weight of the polymer composition.

The quantity of zinc that is present in said polymer composition may for example be at most 15.0 wt%, alternatively for example at most 12.5 wt%, alternatively for example at most 10.0 wt%, alternatively for example at most 7.5 wt%, alternatively for example at most 5.0 wt%, in respect of the total weight of the polymer composition.

The presence of zinc in quantities of at least 0.5 wt% may contribute to a desired high corrosion resistance.

Another embodiment of the invention is a thermal spray coating powder comprising a polymer composition comprising
a) an α-olefin homopolymer or copolymer;
b) a functionalized α-olefin homopolymer or copolymer;
c) a polyolefinic elastomer; and
d) an anti-corrosion additive, wherein the anti-corrosion additive is zinc phosphate
in which the powder particles have an average particle size D₅₀ as measured according to ISO-13320 of between 100 and 600 µm. Alternatively, said powder particles have an average particle size D₅₀ of for example at least 150 µm, alternatively for example at least 200 µm, alternatively for example at least 250 µm, and for example at most 550 µm, alternatively for example at most 500 µm, alternatively for example at most 450 µm.

In an embodiment, the polymer composition or the thermal spray coating powder may for example be used in thermal spray coating application. The coating thus obtained may for example comprise one or more layers comprising the polymer composition or the thermal spray coating powder. The coating thus obtained has a coating to substrate adhesion of for example greater than 8 MPa, alternatively greater than 10 MPa. The coating to substrate adhesion may for example be greater than the cohesive force of the coating material. The coating to substrate adhesion is measured by making two parallel cuts in sample plaques prepared by coating steel plaques of 10x15 cm having a thickness of 3mm with a polymer composition according to the present invention by thermal spray coating at 350°C to obtain a sample plaque having a coating of 800 µm thickness. The parallel cuts were made 2 cm apart along the whole length of the sample plaques. A length of 2 cm of one side of the 2 cm wide strip between the two parallel cuts is peeled loose, and clamped into a clamp of a universal tensile test bench. The coated plate is clamped under an angle of 45° to the opposite clamp of said tensile test bench. The 2 cm wide strip of coating is then pulled from the substrate at a constant speed of 50 mm/min, under constant measurement of the tensile force that needs to be applied. The coating to substrate adhesion is the average force measured during the test.

The process of thermal spray coating of a substrate using the polymer composition or the thermal spray coating powder may for example be operated by, under ambient conditions, positioning a thermal spray gun at a distance of for example between 20 and 100 cm from the substrate surface, alternatively for example between 30 and 70 cm from the substrate surface. The substrate surface maybe degreased prior to the coating process, and may be treated by sandblasting. The thermal spray coating powder may be fed to the spray gun by a flow of an oxidizing gas such as for example air or oxygen. A combustible gas may be supplied to fuel a flame which may act as heat source. The ratio of combustible gas to oxidizing gas is regulated in such way that upon ignition a blue flame is produced. The spray gun may be moved along the substrate surface at a constant speed, to ensure a coating layer of even thickness to be applied.

The substrate material subjected to thermal spray coating using the polymer composition or the thermal spray coating powder may for example be one or more selected from steel, concrete, cast iron, fiberglass, thermoset resins, and/or wood. In an embodiment, the substrate material may for example be selected from steel, concrete and cast iron.

The substrate may for example be preheated. In an embodiment, the substrate may for example be preheated to a temperature of at least 80°C. Alternatively, the substrate may be preheated to a temperature of at least 100°C.

The polymer composition may for example comprise additional additives such as antioxidants, light stabilisers, colorants, and/or fluoropolymers. Other additives may also be added to the polymer composition. Examples of additives that may be added are described in 'Plastics Additives Handbook', H. Zweifel et al., Hanser, Munich, 2009.

The polymer composition and thermal spray coating powder of the present invention provides a corrosion protection solution for structural objects by offering substrate adhesion characteristics combined with long-term corrosion resistance and long-term weather resistance.

The following definitions are used in the present description and claims to define the stated subject matter.

"Structural objects" as used in the context of the present invention are movable or immovable objects designed to withstand a durable exposure to environmental conditions present in the environment for which they are designed to operate.

Examples of structural objects include pipelines and storage tanks for the oil and gas industry, power plant equipment such as cooling towers, sea defense structures, offshore windmill structures, marine transport vessels, boat hulls, tanks for storage of oil and chemical products, bridges, electrical power line support towers or pylons, and buildings.

"Substrate material" as used in the context of the present invention means the material forming the surface of said structural object which is suitable to be subjected to thermal spray coating.

"Environmental conditions" as used in the context of the present invention means the exposure to weather conditions, solar irradiation and marine environments.

"a-olefins" as used in the context of the present invention are acyclic alkenes having a double bond connecting the first and the second carbon atom in the carbon chain.

Examples of α-olefins are ethylene, propylene, 1-butene, 1-methyl-4-pentene, 1-hexene and 1-octene.

"a-olefin homopolymers or copolymers" or "polyolefins" as used in the context of the present invention are homopolymers or copolymers prepared using one or more of said α-olefins as monomers.

As used herein, the terms 'polyolefin' and 'α-olefin homopolymer or copolymer' are interchangeable.

"Functionalized α-olefin homopolymers or copolymers" as used in the context of the present invention are α-olefin homopolymers or copolymers as previously defined, which include as chemically bound part at least one or more functional moieties.

"Functional moiety" as used in the context of the present invention means a moiety that present said α-olefin homopolymers or copolymers with a functional property.

In an embodiment, the functional property presented by the at least one or more functional moieties chemically bound to the said α-olefin homopolymer or copolymer is an adhesive property.

"Polyolefinic elastomer" as used in the context of the present invention means a polyolefin material having both thermoplastic and elastomeric properties, which can be processed by common processing methods for thermoplastic materials.

"Vinyl moiety" as used in the context of the present invention means a moiety having the generic structure: R₂-C=C-R₂ which is capable to react under radical reaction conditions, in which both R moieties may include heteroatoms, and in which both R groups may together or independently form cyclic structures.

"Single-layer coating system" as used in the context of the present invention means a coating system in which one single layer of material contributes all the desired functionality that is required for the coating.

"Base coat" as used in the context of the present invention means a coating layer applied directly onto the substrate surface of which the main functional feature is to ensure compatibility of the substrate surface and the main coat.

"Thermal spray coating powder" in the context of the present invention means a powder comprising the polymer composition of the present invention which is suitable for processing via thermal spray coating.

"Thermal spray coating device" in the context of the present invention means a device by means of which the polymer composition of the present invention may be applied onto the surface of a substrate.

"Anti-corrosion additive" in the context of the present invention means a chemical compound that is comprised in the polymer composition of the present invention which presents the coating produced using the polymer composition of the present invention with properties that suppress corrosion of the substrate material to occur.

"Corrosion" as used in the context of the present invention means the degradation, for example oxidative degradation, of the substrate material for example as a result of exposure to environmental conditions

"Long-term weather resistance" as used in the context of the present invention means the ability of a coating under exposure to outdoor conditions to resist the occurrence of such defects of the coating which would result in the substrate surface being exposed to environmental conditions.

"Long-term corrosion resistance" as used in the context of the present invention means the duration of the resistance of the substrate material to which the coating of the present invention is applied to corrosion.

"Coating to substrate adhesion" as used in the context of the present invention means the attracting force between the coating applied via thermal spray application and the surface of the substrate onto which the coating is applied.

"Adhesion" as used in the context of the present invention means the attracting force between two different materials resulting from intermolecular forces that establish between them.

"Adhesive failure" as used in the context of the present invention means the occurrence of a defect in the coating due to a disruption of the attraction of the intermolecular forces established between two different materials being the substrate and the coating material.

"Cohesive failure" as used in the context of the present invention means the occurrence of a defect due to a disruption of the attraction of the intermolecular forces within the material of either the substrate or the coating material or both.

Further description of adhesion and cohesion is presented in the Handbook of Adhesion Technology, L. Da Silva et al., Springer, 2011, p. 4-5.

"Thermal spray coating" as used in the context of the present invention means a process for applying a coating to a substrate material, in which the coating material is applied in a sufficiently softened or molten state, and in which the material is transported from a thermal spray device to the substrate material in a particulate form and propelled by a carrier gas.

A description of thermal spray coating processes is presented in the Handbook of Thermal Spray Technology, J.R. Davis (ed.), ASM international, 2004, p. 1-13. In the thermal spray process, an energy source is used to heat the coating material to a molten or semi-molten state. The energy can be provided by e.g. flame, electric arc or plasma arc. The process of heating and applying the coating material is performed using a spray device, such as a spray gun. The coating material supplied to the spray device can be in the form of powder, wire or rods. The heated particles are propelled onto a substrate material. Upon impact of the substrate material, the particles form a bond with the surface, and undergo cooling at very high cooling rates, thereby forming a coating layer.

The polymer composition according to the present invention can be used in single-layer coating systems, or in one or more layers of multi-layered coating systems. Preferably the polymer composition according to the present invention is used in single-layer coating systems.

Most preferably, the polymer composition comprises:
a) 60.0 - 95.0 wt% of an α-olefin homopolymer or copolymer, wherein the α-olefin homopolymer or copolymer is a low density polyethylene having a density of between 910 and 940 kg/m³;
b) 1.0 - 5 wt% of a functionalized α-olefin homopolymer or copolymer, wherein the functionalized α-olefin homopolymer or copolymer is a maleic anhydride-grafted polyethylene;
c) 2.0 - 15 wt% of a polyolefinic elastomer, wherein the polyolefinic elastomer is a copolymer of ethylene and 1-octene having a density of between 855 kg/m³ and 890 kg/m³ as measured according to ISO 1183; and
d) 1.0 - 30 wt% of an anti-corrosion additive, wherein the anti-corrosion additive is zinc phosphate
with regard to the total weight of the polymer composition.

The invention will now be illustrated by the following non-limiting examples.

### Test methods

For all experiments, samples were prepared by coating steel plaques of 10x15 cm having a thickness of 3mm with a polymer composition as presented in Table 1 by thermal spray coating at 350°C to obtain a sample plaque having a coating of 800 µm thickness.

The obtained sample plaques were subjected to testing according to the methods as described below.

Long-term corrosion resistance was measured via a salt water spray test as described in ISO 20340:2009, relating to performance requirements for protective paint systems for offshore and related structures. The test involved 5 cycles, each cycle consisting of:
- exposure to UV light and condensation according to ISO11507, method A, for 72 hours; followed by
- exposure to salt water spray according to ISO 9227, for 72 hours; followed by
- exposure to a temperature of -20°C, for 24 hours

After 5 cycles, the length of ingression of corrosion was measured.

Long-term weather resistance was measured by exposure of samples to accelerated weathering conditions in an Atlas Weather-O-Meter 17 weathering machine. The weathering machine was operated using the settings as described in ASTM G155, according to cycle 1. The light source that was used was a xenon arc light source. The light was filtered via a borosilicate S filter. The samples were continuously illuminated at a regulated radiation intensity of 0.35 W/m²/nm at 340 nm. The weathering machine was operated at a black panel temperature of 63°C and a relative humidity of 50%. A continuous cycle was used in which samples were subjected to water spray for 18 minutes, followed by 102 minutes of dry conditions. Via visual observation, samples were checked for defect formation after each 14 days. The samples were classified as failure upon observation of defects. The long-term weather resistance was measured in terms of weeks to occurrence of failure. The test lasted for 1 year.

The coating to substrate adhesion was measured by making two parallel cuts in sample plaques. The parallel cuts were made 2 cm apart along the whole length of the sample plaques. A length of 2 cm of one side of the 2 cm wide strip between the two parallel cuts is peeled loose, and clamped into a clamp of a universal tensile test bench. The coated plate is clamped under an angle of 45° to the opposite clamp of said tensile test bench. The 2 cm wide strip of coating is then pulled from the substrate at a constant speed of 50 mm/min, under constant measurement of the tensile force that needs to be applied. The coating to substrate adhesion is the average force measured during the test.

Long-term adhesion was measured by subjecting sample plaques to a temperature cycle test. Sample plaques were prepared by making two incisions in the form of a cross, each incision having a length of 2 cm. The incisions were made in such way that the coating was cut to the surface of the steel substrate. The thus prepared sample plaques were subjected to temperature cycles, each cycle consisting of:
- exposure to a temperature of -20°C for 20 minutes
- exposure to a temperature of 0°C for 10 minutes
- gradual increase of temperature to 80°C in 180 minutes
- exposure to a temperature of 80°C for 30 minutes

Via visual observation, samples were checked for spots of adhesive defects along the incisions upon completion of each cycle. The samples were classified as failure upon observation of adhesive defects. The test lasted for 1 year.

### Experiments

In a 25 mm twin screw extruder, operated at 190°, polymer compositions were prepared using the ingredients in quantities as listed in table 1.

**Table 1**

| Example | 1 | 2 | 3 | 4 | C1 | C2 | C3 |
|---|---|---|---|---|---|---|---|
| LDPE | 86.81 | 81.81 | 86.81 | 81.81 | 92.03 | 99.56 | 100 |
| Antioxidant | 0.19 | 0.19 | 0.19 | 0.19 | 0.18 | 0.19 | |
| Light stabilizer | 0.25 | 0.25 | 0.25 | 0.25 | 0.24 | 0.25 | |
| Polyolefin elastomer | 5.00 | 5.00 | 5.00 | 5.00 | 4.87 | | |
| Functionalized polyethylene | 2.75 | 2.75 | 2.75 | 2.75 | 2.68 | | |
| Anti-corrosion additive | 5.00 | 10.00 | 5.00 | 10.00 | | | |

The values in table 1 present weight fractions in % of the total composition.

As antioxidant, a blend of Irganox B225, a product obtainable from BASF was used. Irganox B225 is a blend containing 50 wt% Irganox 1010 (tetrakis(3,5-di-tert-butyl-4-hydroxyhydrocinnamoyloxymethyl)methane) and 50 wt% Irgafos 168 (tris(2,4-di-tert-butylphenyl) phosphite).

As light stabilizer, Chimassorb 944, (poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]), a product obtainable from BASF was used.

As an α-olefin homopolymer or copolymer, a linear low-density polyethylene, also referred to as LDPE, having a melt index as measured according to as measured according to ISO 1133 at a temperature of 190°C and a load of 2.16 kg of 22 g/10 min, and having a density as measured according to ISO 1183 of 922 kg/m³.

As polyolefin elastomer, Engage 8400, an ethylene-octene based polyolefin elastomer product obtainable from Dow Chemical was used.

As a functionalized α-olefin homopolymer or copolymer, Polybond 3029, obtainable from Addivant, was used.

As anti-corrosion additive, zinc phosphate was used. In examples 1 and 2, the zinc phosphate that was used is ZPLEX 111, a compound comprising 10-25 wt% of zinc phosphate, obtainable from Halox. In examples 3 and 4, ZPLEX 250, a zinc phosphate, obtainable from Halox, was used.

**Table 2**

| Example | 1 | 2 | 3 | 4 | C1 | C2 | C3 |
|---|---|---|---|---|---|---|---|
| Ingression of corrosion (mm) | 13 | 11 | 16 | 13 | 48 | | |
| Coating to substrate adhesion (MPa) | CF | CF | CF | CF | | 0.8 | |
| Long-term adhesion (cycles) | NF | NF | NF | NF | 8 | 3 | 2 |
| Weather resistance (weeks) | NF | NF | NF | NF | NF | NF | 2 |

In examples 1-4 according to the present invention, cohesive failure occurred, as indicated by CF in Table 2. This demonstrates that the coating to substrate adhesion exceeds the cohesive strength of the material itself.

In examples 1-4 according to the present invention no failure was observed on sample plaques that were subjected to the long-term adhesion testing. This is indicated in the table by NF.

In examples 1-4 according to the present invention and comparative examples C1 and C2, no failure was observed on sample plaques that were subjected to the long-term weather resistance testing in the Weather-O-Meter. This is indicated in the table by NF.

From the examples as presented above, it becomes evident that compositions according to the present invention show good long-term corrosion resistance, good coating to substrate adhesion, good long-term adhesion and good long-term weather resistance.

## Claims

1. Polymer composition for use in thermal spray coating application, in which the composition comprises:
a) an α-olefin homopolymer or copolymer;
b) a functionalized α-olefin homopolymer or copolymer;
c) a polyolefinic elastomer; and
d) an anti-corrosion additive, wherein the anti-corrosion additive is zinc phosphate.

2. Composition according to claim 1 in which the polymer composition comprises 1-10 wt% functionalized α-olefin homopolymer or copolymers.

3. Composition according to any one or more of claims 1-2 in which the polymer composition comprises 0.5-15 wt% polyolefinic elastomers.

4. Composition according to any one or more of claims 1-3 in which the polymer composition comprises 1.0-30 wt% anti-corrosion additive.

5. Polymer composition according to any one of claims 1-4 in which the composition comprises:
a) 60.0 - 95.0 wt% of an α-olefin homopolymer or copolymer;
b) 1.0 - 5 wt% of a functionalized α-olefin homopolymer or copolymer;
c) 2.0 - 15 wt% of a polyolefinic elastomer; and
d) 2.0 - 15 wt% of an anti-corrosion additive, wherein the anti-corrosion additive is zinc phosphate
with regard to the total weight of the polymer composition.

6. Composition according to any one or more of claims 1-5 in which the α-olefin homopolymer or copolymer is selected from a propylene homopolymer, a propylene copolymer, a low density polyethylene, a linear low density polyethylene, or a high density polyethylene.

7. Composition according to any one or more of claims 1-6 in which the functionalized α-olefin homopolymer or copolymer has a functional moiety that is present as part of the main polymer chain or of one of more of the side chains, as a moiety grafted onto the polymer, or as a functional end group terminating the main polymer chain or one or more of the side chains, in which said functional moiety is one or more selected from a hydroxyl functional moiety, an amine functional moiety, an acrylic or methacrylic acid functional moiety, a cyclic acid anhydride functional moiety, a siloxy functional moiety or an amino-silane functional moiety.

8. Composition according to any one or more of claims 1-7 in which the polyolefinic elastomer is a copolymer of ethylene and at least one α-olefin containing 3 to 8 carbon atoms, having a density of between 855 kg/m³ and 920 kg/m³ as measured according to ISO 1183 and having a melt index of between 0.5 and 40 g/10 min as measured according to ISO 1133 at a temperature of 190°C and a load of 2.16 kg.

9. Thermal spray coating powder comprising a polymer composition according to any one or more of claims 1 - 8 in which the powder particles have an average particle size D₅₀ as measured according to ISO-13320 of between 100 and 600 µm.

10. Use of the polymer composition according to any one or more of claims 1-8 or the coating powder according to claim 9 in thermal spray coating application.

11. Coating comprising one or more layers comprising a polymer composition according to any one or more of claims 1-8 or prepared using the coating powder according to claim 9.

12. Thermal spray coating process of a substrate using a polymer composition according to any one or more of claims 1-8 or a coating powder according to claim 9.

13. Process according to claim 12 in which the substrate is one or more selected from steel, concrete, cast iron, fiberglass, thermoset resins, and/or wood.

14. Process according to claims 12 or 13 in which the substrate is preheated.

## Patentansprüche

1. Polymerzusammensetzung zur Verwendung in einer thermischen Spritzbeschichtungsanwendung, in der die Zusammensetzung Folgendes umfasst:
a) ein α-Olefin-Homopolymer oder -Copolymer;
b) ein funktionalisiertes α-Olefin-Homopolymer oder -Copolymer;
c) ein polyolefinisches Elastomer; und
d) ein Korrosionsschutzadditiv, wobei das Korrosionsschutzadditiv Zinkphosphat ist.

2. Zusammensetzung nach Anspruch 1, in der die Polymerzusammensetzung 1-10 Gew.-% funktionalisiertes α-Olefin-Homopolymer oder -Copolymere umfasst.

3. Zusammensetzung nach einem oder mehreren der Ansprüche 1-2, in der die Polymerzusammensetzung 0,5-15 Gew.-% polyolefinische Elastomere umfasst.

4. Zusammensetzung nach einem oder mehreren der Ansprüche 1-3, in der die Polymerzusammensetzung 1,0-30 Gew.-% Korrosionsschutzadditiv umfasst.

5. Polymerzusammensetzung nach einem der Ansprüche 1-4, in der die Zusammensetzung Folgendes umfasst:
a) 60,0 - 95,0 Gew.-% eines α-Olefin-Homopolymers oder -Copolymers;
b) 1,0 - 5 Gew.-% eines funktionalisierten α-Olefin-Homopolymers oder -Copolymers;
c) 2,0 - 15 Gew.-% eines polyolefinischen Elastomers; und
d) 2,0 - 15 Gew.-% eines Korrosionsschutzadditivs, wobei das Korrosionsschutzadditiv Zinkphosphat ist,
in Bezug auf das Gesamtgewicht der Polymerzusammensetzung.

6. Zusammensetzung nach einem der Ansprüche 1-5, in der das α-Olefin-Homopolymer oder -Copolymer aus einem Propylen-Homopolymer, einem Propylen-Copolymer, einem Polyethylen mit niedriger Dichte, einem linearen Polyethylen mit niedriger Dichte oder einem Polyethylen mit hoher Dichte ausgewählt ist.

7. Zusammensetzung nach einem oder mehreren der Ansprüche 1-6, in der das funktionalisierte α-Olefin-Homopolymer oder -Copolymer eine funktionelle Einheit aufweist, die als Teil der Hauptpolymerkette oder einer von mehreren der Seitenketten vorhanden ist, als Einheit, die auf das Polymer gepfropft ist, oder als eine funktionelle Endgruppe, die die Hauptpolymerkette oder eine oder mehrere der Seitenketten abschließt, vorhanden ist, in der die funktionelle Einheit eine oder mehrere, ausgewählt aus einer funktionellen Hydroxyl-Einheit, einer funktionellen Amin-Einheit, einer funktionellen Akryl- oder Methakrylsäure-Einheit, einer funktionellen Zyklische-Säureanhydrid-Einheit, einer funktionellen Siloxy-Einheit oder einer funktionellen Aminosilan-Einheit ist.

8. Zusammensetzung nach einem oder mehreren der Ansprüche 1-7, in der das polyolefinische Elastomer ein Copolymer von Ethylen und mindestens ein α-Olefin ist, das 3 bis 8 Kohlenstoffatome enthält, das eine Dichte zwischen 855 kg/m³ und 920 kg/m³, gemessen nach ISO 1183, aufweist, und einen Schmelzindex zwischen 0,5 und 40 g/10 min, gemessen nach ISO 1133, bei einer Temperatur von 190 °C und einer Last von 2,16 kg aufweist.

9. Thermisches Spritzbeschichtungspulver, umfassend eine Polymerzusammensetzung nach einem oder mehreren der Ansprüche 1-8, in dem die Pulverteilchen eine durchschnittliche Teilchengröße D₅₀, gemessen nach ISO-13320, zwischen 100 und 600 µm aufweisen.

10. Verwendung der Polymerzusammensetzung nach einem oder mehreren der Ansprüche 1-8 oder des Beschichtungspulvers nach Anspruch 9 in einer thermischen Spritzbeschichtungsanwendung.

11. Beschichtung, umfassend eine oder mehrere Schichten, die eine Polymerzusammensetzung nach einem oder mehreren der Ansprüche 1-8 umfassen, oder die dazu vorbereitet ist, das Beschichtungspulver nach Anspruch 9 zu verwenden.

12. Thermales Spritzbeschichtungsverfahren eines Substrats unter Verwendung einer Polymerzusammensetzung nach einem oder mehreren der Ansprüche 1-8 oder eines Beschichtungspulvers nach Anspruch 9.

13. Verfahren nach Anspruch 12, in dem das Substrat eines oder mehrere, ausgewählt aus Stahl, Beton, Gusseisen, Glasfaser, duroplastischen Harzen und/oder Holz ist.

14. Verfahren nach den Ansprüchen 12 oder 13, in dem das Substrat vorgewärmt ist.

## Revendications

1. Composition polymère à utiliser dans une application de revêtement par pulvérisation thermique, dans laquelle la composition comprend :
a) un homopolymère ou copolymère d'α-oléfine ;
b) un homopolymère ou copolymère d'a-oléfine fonctionnalisé ;
c) un élastomère polyoléfinique ; et
d) un additif anticorrosion, dans laquelle l'additif anticorrosion est le phosphate de zinc.

2. Composition selon la revendication 1, dans laquelle la composition polymère comprend 1 à 10 % en poids d'homopolymère ou de copolymères d'a-oléfine fonctionnalisé.

3. Composition selon l'une quelconque ou plusieurs des revendications 1 à 2, dans laquelle la composition polymère comprend 0,5 à 15 % en poids d'élastomères polyoléfiniques.

4. Composition selon l'une quelconque ou plusieurs des revendications 1 à 3, dans laquelle la composition polymère comprend 1,0 à 30 % en poids d'additif anticorrosion.

5. Composition polymère selon l'une quelconque des revendications 1 à 4, dans laquelle la composition comprend :
a) 60,0 à 95,0% en poids d'un homopolymère ou copolymère d'α-oléfine ;
b) 1,0 à 5 % en poids d'un homopolymère ou copolymère d'a-oléfine fonctionnalisé ;
c) 2,0 à 15 % en poids d'un élastomère polyoléfinique ; et
d) 2,0 à 15 % en poids d'un additif anticorrosion, dans laquelle l'additif anticorrosion est le phosphate de zinc par rapport au poids total de la composition polymère.

6. Composition selon l'une quelconque ou plusieurs des revendications 1 à 5, dans laquelle l'homopolymère ou le copolymère d'a-oléfine est choisi parmi un homopolymère de propylène, un copolymère de propylène, un polyéthylène basse densité, un polyéthylène basse densité linéaire ou un polyéthylène haute densité.

7. Composition selon l'une quelconque ou plusieurs des revendications 1 à 6, dans laquelle l'homopolymère ou le copolymère d'a-oléfine fonctionnalisé a un fragment fonctionnel qui est présent en tant que partie de la chaîne polymère principale ou d'une ou plusieurs des chaînes latérales, en tant que fragment greffé sur le polymère, ou en tant que groupe terminal fonctionnel terminant la chaîne principale du polymère ou une ou plusieurs des chaînes latérales, dans lequel ledit fragment fonctionnel est un ou plusieurs fragments choisis parmi un fragment fonctionnel hydroxyle, un fragment fonctionnel amine, un groupe acrylique ou un fragment fonctionnelle acide méthacrylique, un fragment fonctionnel anhydride d'acide cyclique, un fragment fonctionnel siloxy ou un fragment fonctionnel amino-silane.

8. Composition selon l'une quelconque ou plusieurs des revendications 1 à 7 dans laquelle l'élastomère polyoléfinique est un copolymère d'éthylène et d'au moins une α-oléfine contenant 3 à 8 atomes de carbone, ayant une densité comprise entre 855 kg/m³ et 920 kg/m³ mesurée selon ISO 1183 et ayant un indice de fusion compris entre 0,5 et 40 g/10 min mesuré selon ISO 1133 à une température de 190 °C et une charge de 2,16 kg.

9. Poudre de revêtement par pulvérisation thermique comprenant une composition polymère selon l'une quelconque ou plusieurs des revendications 1 à 8, dans laquelle les particules de poudre ont une granulométrie moyenne D₅₀ telle que mesurée selon ISO-13320 comprise entre 100 et 600 µm.

10. Utilisation de la composition polymère selon l'une quelconque ou plusieurs des revendications 1 à 8 ou de la poudre de revêtement selon la revendication 9 dans une application de revêtement par pulvérisation thermique.

11. Revêtement comprenant une ou plusieurs couches comprenant une composition polymère selon l'une quelconque ou plusieurs des revendications 1 à 8 ou préparé en utilisant la poudre de revêtement selon la revendication 9.

12. Procédé de revêtement par pulvérisation thermique d'un substrat utilisant une composition polymère selon l'une quelconque ou plusieurs des revendications 1 à 8 ou une poudre de revêtement selon la revendication 9.

13. Procédé selon la revendication 12 dans lequel le substrat est un ou plusieurs substrats choisis parmi l'acier, le béton, la fonte, la fibre de verre, les résines thermodurcissables et/ou le bois.

14. Procédé selon les revendications 12 ou 13 dans lequel le substrat est préchauffé.
